(19)

Europäisches
Patentamt
European
Patent Office
Office européen
des brevets

(11) **EP 2 709 323 A1**

(12) **EUROPEAN PATENT APPLICATION**

(43) Date of publication:
**19.03.2014 Bulletin 2014/12**

(51) Int Cl.:
**H04L 25/02** *(2006.01)*

(21) Application number: **12306111.1**

(22) Date of filing: **14.09.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Alcatel Lucent
75007 Paris (FR)**

(72) Inventors:
• **Chen, Yejian
70825 Korntal-Münchingen (DE)**
• **ten Brink, Stephan
70469 Stuttgart (DE)**

(74) Representative: **2SPL Patentanwälte
Postfach 15 17 23
80050 München (DE)**

(54) **Apparatus, Method and Computer Program for a Receiver and a Transmitter**

(57)     Embodiments provide an apparatus, a method and a computer program for a receiver and a transmitter. The apparatus 10 for a receiver comprises means for receiving 12 a receive symbol. The receive symbol is based on a transmit symbol transmitted by a transmitter. The transmit symbol is based on two or more payload data symbols comprising information on payload data. The apparatus further comprises means for estimating 14 a radio channel between the transmitter and the receiver based on the receive symbol and for estimating the payload data comprised in the transmit symbol based on the receive symbol. The apparatus 10 further comprises means for detecting 16 the payload data based on the estimated payload data. The transmitter apparatus being operable to transmit a plurality of transmit symbols. A transmit symbol being based on two or more payload data symbols comprising information on payload data. The transmitter apparatus is operable to transmit the plurality of transmit symbols on a plurality of transmit antennas based on a space-time precoding scheme, wherein the space time precoding scheme applies a phase shift to at least one of simultaneously transmitted transmit symbols, and wherein the phase shift is applied to different transmit symbols in different time instances of the space time precoding scheme.

Fig. 1

Printed by Jouve, 75001 PARIS (FR)

## Description

Embodiments of the present invention relate to data transmission, more particularly but not exclusively to reception and data detection in wireless communications.

## Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts are one way forward.

In conventional systems reference or pilot symbols are transmitted to enable channel estimation of the wireless channel at the receiver. In other words, known transmit symbols are transmitted on known radio resources, i.e. at known times such as specific radio slots, at known frequencies such as specific sub-bands, known antennas or beams, known codes etc. As the receiver has knowledge on the reference symbols themselves as well as on the radio resources they use, the receiver can estimate the radio channel the symbol has experienced. Moreover, said radio channel estimate can be assumed to represent the radio channel, i.e. to be valid, for a certain time, within a certain bandwidth, for a certain antenna or beam, etc. As know from prior art the wireless channel undergoes many propagation effects such as multi path propagation, shadowing, diffraction, deflection, etc. all causing the wireless channel to change with time, i.e. to be time variant, with frequency, i.e. to be frequency variant, with location, i.e. to be space variant, etc.

As the data demand gets higher systems tend to use higher bandwidths, shorter time granularities, more antennas, spatial multiplexing concepts etc. Therewith, more and more radio resources are used for reference symbols. Reference symbols are used in a grid, i.e. a reference symbol is transmitted at predefined frequency spacing within the coherence bandwidth of the radio channel, e.g. every predetermined number of sub-carriers, to enable the receiver to estimate and interpolate the radio channel between these sub-carriers. Moreover, a reference symbol is transmitted at predefined time spacing within the coherence time of the radio channel, e.g. every predetermined number of symbols, to enable the receiver to estimate and interpolate the radio channel between these symbols. The same holds in the spatial domain with respect to the coherence length of the radio channel, etc. In other words, as the system capacity grows more and more radio resources are used for reference symbol transmission to enable channel estimation for the more and more complex systems.

## Summary

Embodiments are based on the finding that channel estimation and data detection can be enabled without using pilot or reference symbols. This can be achieved by using modulation schemes or encoding schemes at the transmitter, which distribute information on a payload symbol over multiple transmit symbols. In other words, the one payload data symbol may then influence two or more transmit symbols. An estimator can then base the estimation on sequence estimation, i.e. on estimating a sequence of symbols rather than a single symbol. As one payload symbol influences two or more transmit symbols and therewith receive symbols sequence estimation can be enabled on different hypothesis on the transmit symbol. Hence, embodiments may enable a pilot-free joint channel and data estimation algorithm. Such an algorithm may be used for Multiple-Input-Multiple-Output (MIMO) systems, e.g. using Differential Phase Shift Keying (DPSK). Embodiments may allow to simultaneously track $M_T \cdot M_R$ MIMO fading channels, where $M_T$ and $M_R$ denote the number of transmit and receive antennas, respectively. Furthermore, the corresponding link performance may be near-capacity with respect to the numerical results as compared to a system with perfect channel estimation.

Embodiments are further based on the finding that discrete pilot grids may at least partly be omitted. Embodiments may provide a higher spectral efficiency than conventional systems due to the utilization of a reduced number of or even no pilot symbols. Moreover, embodiments may make use of pilot-free joint channel and data estimation for MIMO systems. Some embodiments may also be used in single input and/or single output systems. Embodiments may provide the advantage that a higher efficiency can be achieved as compared to using discrete pilots, which is generally adopted by the current wireless standards, superimposed pilot symbols, respectively. Obviously, discrete pilots have to be periodically allocated in the time and frequency resource, and can thus reduce the overall achievable rate. Especially, discrete pilots can be sensitive to the fading rate of wireless channels. Namely, if the fading rate of wireless channels increases, the corresponding link performance can significantly degrade due to insufficient pilot insertion rate, i.e. the distance between two consecutive pilot symbols may become too large, e.g. larger than the coherence time or bandwidth.

Embodiments provide an apparatus for a receiver such as a wireless receiver, i.e. embodiments may provide said apparatus to be operated by or included in a receiver. The apparatus will also be referred to as receiver apparatus. In embodiments the receiver apparatus can be comprised in a base station transceiver or in a mobile station transceiver of a mobile communication system. In other embodiments the apparatus may be comprised in a wireless transceiver of any kind.

In some embodiments the receiver apparatus may be comprised in a wireless or mobile communication system. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology.

A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

In embodiments the receiver apparatus comprises means for means for receiving a receive symbol. The means for receiving may correspond to a receiver, which is compliant with one of the above communication systems or communication standards. In other words, in embodiments the means for receiving or the receiver may be operable to receive one or more receive symbols. The means for receiving or the receiver may comprise typical receiver components such as one or more receive antennas, one or more low-noise amplifiers, one or more filter circuits or filter means, etc. In further embodiments, the receiver may even comprise a mixer for converting a receive signal or symbol from the transmission band to the base band and according base band processing means. For example, the receiver may comprise a Digital Signal Processor (DSP) for processing receive symbols in the baseband, after they have been down-converted from the transmission band and digitized. The receive symbol is based on a transmit symbol transmitted by a transmitter. The transmit symbol is based on two or more payload data symbols comprising information on payload data. That is to say that one payload data symbol may influence two or more transmit symbols. For example, when using differential encoding the first payload data symbol of a sequence may influence the entire rest of the sequence as will be detailed subsequently.

The receiver apparatus further comprises means for estimating a radio channel between the transmitter and the receiver based on the receive symbol and for estimating the payload data comprised in the transmit symbol based on the receive symbol. In embodiments the means for estimating can correspond to an estimator. The means for estimating can be implemented, for example, on a DSP that runs according software. From the receive symbols, the payload data may be estimated based on a pilot-free joint channel and data estimation. The receiver apparatus further comprises means for detecting the payload data based on the estimated payload data. In embodiments the means for detecting can correspond to a detector. The means for detecting can be implemented, for example, on a DSP that runs according software. In other words, the receiver apparatus may comprise components to carry out pilot-free joint channel and data estimation. The payload data may then be detected based on the estimated data.

In some embodiments the transmit symbol corresponds to differentially encoded payload data symbol. That is to say, in some embodiments differentially encoded or differentially modulated transmit symbols may be used. For example, Differential Phase Shift Keying (DPSK) can be used. In further embodiments the means for receiving may comprise a plurality of receive antennas for receiving a plurality of receive symbols. That is to say one or more receive antennas may be used to receive one or more receive symbols at the same time. The receive antennas may, for example, belong to an array of antennas such as a linear antenna array, a circular antenna array, a triangular antenna array, or any other antenna geometry. For example, the antenna spacing may be chosen in a way that the receive signals or receive symbols on the different antennas are only weakly correlated or not correlated at all. In some embodiments cross-polarized antennas may be used.

The means for estimating can be operable to estimate the radio channel between the transmitter and the plurality of receive antennas based on the plurality of receive symbols. That is to say between each of the plurality of receive antennas and the transmitter a radio channel may be estimated. In some embodiments the transmitter may utilize multiple transmit antennas, and hence, the radio channels between each of the transmit antennas and each of the receive antennas may be estimated. The radio channel may be estimated in terms of an attenuation, a phase shift, etc. The means for estimating can be operable to estimate information on payload data comprised in one or more transmit symbols based on the plurality of receive symbols. In other words, in embodiments the plurality of receive symbols received of the plurality of receive antennas may form a basis for estimation of the payload data.

In embodiments the transmitter and receiver can be operable to perform any spatial transmission concept, such as space time coding, spatial multiplexing, beamforming, cooperative multipoint transmission, etc. Hence, any multiple input transmission concept may be used by the transmitter and any multiple output concept may be used by the receiver, some of which will be detailed subsequently.

Moreover, the plurality of receive symbols may also form a basis for the estimation of the above-described radio channels. Furthermore, in embodiments different methods for estimating the transmit symbols or the payload data symbols based on the plurality of receive symbols may be used. For example, maximum likelihood detection or estimation may be used. As has been mentioned above, the plurality of receive symbols can comprise a plurality of spatially multiplexed or space time coded transmit symbols. Each of the transmit symbols may comprise information on payload data or on the payload data symbol. In other words, in a scenario wherein the transmitter uses a plurality of transmit antennas and the receiver uses a plurality of receive antennas, different concepts are conceivable. Among them is spatial multiplexing, wherein the different spatially multiplexed transmit symbols are estimated based on the plurality of receive symbols. Another concept is space time coding, where the plurality of transmit symbols is multiplexed in space and time and then estimated at the receiver.

In further embodiments the means for estimating can be operable to jointly estimate the payload data and a radio channel between the receiver and the transmitter based on the one or more receive symbols. That is to say the estimation of the payload data or the transmit symbols and the radio channel may be performed jointly, i.e. together. In some embodiments the means for estimating can be operable to determine a hypothesis on the transmit symbol. In other words the means for estimating may base the estimation on an assumption on which transmit symbol has been transmitted at a certain time interval. In other words the transmit symbols are based on a limited transmit symbol alphabet, which is known to the receiver or the means for estimating. Therefore, the means for estimating can assume that a certain transmit symbol from the transmit symbol alphabet has been transmitted, and base the channel estimation on that assumption. In a similar way in some embodiments the means for estimating may base said assumption on a payload symbol or on a payload symbol combination from a limited payload symbol alphabet.

Depending on the coding and modulation scheme, as for example DPSK, the assumption may be made on one or more transmit symbols, i.e. it may also be based on combinations of the transmit symbols. Such combinations may range across transmit symbols being transmitted at the same time on different transmit antennas, the combination may also range across combinations of transmit symbols transmitted during different time intervals, or both, in order to carry out an iteration to determine a sequence of hypotheses and channel estimates based on a sequence of receive symbols. In other words based on one or more receive symbols reliability measures, such as likelihood ratios or log-likelihood ratios, may be determined for a hypothesis. The hypothesis may correspond to a certain combination of transmit or payload data symbols as it was described above. Based on said hypothesis the channel may be estimated and the reliability measure can be determined for the hypothesis taking into account the respective receive symbol. Moreover, the iteration may be performed, i.e. the reliability measures may be updated based on relations of different hypotheses.

In embodiments the means for detecting/estimating can be operable to use maximum likelihood detection, for example, with the help of a trellis diagram. The means for estimating/detecting can be operable to determine a hypothesis on the transmit symbol or payload data symbol and then determine a channel estimate based on said hypothesis. Naturally, a plurality of such hypotheses is possible; accordingly, the means for estimating/detecting may comprise a memory, which allows for processing and storing a plurality of said hypotheses.

One reliability measure may be the likelihood ratio or a log likelihood ratio. Moreover, the means for estimating/ detecting can be operable to detect the payload data based on the maximum likelihood of the one or more transmit symbols in consequence of the one or more receive symbols. In some embodiments, the means for estimating can be operable to perform sequence estimation based on a block of transmit and receive symbols. Within such a block of receive symbols, the means for detecting may perform forward and backward iterations, updating log likelihood ratios, reliability measures, respectively. After terminating the iterations, the means for detecting can be operable to decide or detect on the most probable data hypothesis, i.e. on the data combination that is most likely.

In embodiments the means for estimating can be operable to determine a reliability measure for one or more transmit symbols based on one or more receive symbols. In other embodiments the reliability measure may be determined for one or more payload data symbols based on one or more receive symbols. The means for estimating can be further operable to estimate the payload data based on a maximum likelihood of the one or more transmit symbols in consequence of the one or more receive symbols. In other words, maximum likelihood detection or estimation can be used by the means for estimating. In embodiments the means for estimating can be operable to perform an iteration through different states. Such a state can be based on the hypothesis on one or more transmit symbols, payload data symbols, respectively. The means for estimating can then be operable to estimate the radio channel between the transmitter and the receiver based on the hypothesis current state. Moreover the means for estimating can be operable to determine a reliability measure on the transmit symbol or on the payload data symbol based on the hypothesis.

In further embodiments the means for estimating can be operable to group a number of subsequent receive symbols to a block of receive symbols and to perform the iteration within the block of receive symbols. In other words, multiple receive symbols can be received at the same time on different receive antennas and multiple receive symbols may be received at subsequent time intervals. Such time intervals may correspond to radio frames, radio slots, Time Transmission Intervals (TTIs), etc. In embodiments a group of subsequent receive symbols may be formed. For example such a group may start with an initialization symbol, for example, the first symbol of a radio slot, a predetermined number of receive symbols may be gathered in such a group. Within the group sequence estimation may be carried out.

In other words, within the group certain states can be defined, which correspond to different transmit symbol or payload data symbol combinations for the different time intervals within the group. For each of these states the reliability measure may be determined and updated within the iteration. In embodiments the means for estimating can be operable to receive the plurality of receive symbols using the plurality of receive antennas during each of a number of subsequent time intervals. Each of the receive symbols can be based on a plurality of transmit symbols being transmitted during each of a number of subsequent time intervals. The means for estimating can then be further operable to group the receive symbols received during the number of subsequent time intervals and to determine a group of states for each of the time intervals.

The group of states comprising at least one state for each combination of a transmit symbol from a transmit symbol alphabet, or payload data symbol from the payload data symbol alphabet, and a transmit antenna of the transmitter. The means for estimating can be operable to perform the iteration among the states of the group of states. In further embodiments the means for estimating can be operable to perform the iteration in the group of states. The iteration can be performed in forward direction from a state corresponding to an earlier time interval towards a state of the later time interval. The iteration can be further performed in backward direction from the later time interval to the earlier time interval. The means for estimating can be operable to update the reliability measure for each state based on the iteration. The relation may then be stopped when a certain threshold of the reliability measure is reached. In other embodiments the iteration may be stopped after a predetermined number of iterations has been carried out.

For each state different metrics, such as reliability measures may be stored in a memory. Moreover, for each transition between two subsequent states, such reliability measures may be updated. For example, a reliability measure may be updated based on the probability that two of these states and the according payload data symbol combinations occur. These probabilities may further consider the receive symbols, in other words, a posteriori probabilities may be determined.

In line with the above description embodiments further provide a transmitter apparatus being operable to transmit a plurality of transmit symbols. A transmit symbol being based on two or more payload data symbols comprising information on payload data. The transmitter apparatus is operable to transmit the plurality of transmit symbols on a plurality of transmit antennas based on a space-time precoding scheme. The space time precoding scheme applies a phase shift to at least one of simultaneously transmitted transmit symbols. The phase shift is applied to different transmit symbols in different time instances of the space time precoding scheme. In other words the transmitter apparatus uses a space-time precoding scheme, which assigns transmit symbols to the transmit antennas in a sequence of subsequent time instances, such as symbol durations, time slots etc. In every other time instance another transmit symbol is phase shifted. These phase shifts enable the invertibility of an accordingly received signal matrix at the receiver. The matrix inversion in turn enables trellis detection or maximum likelihood detection in general.

Embodiments further provide a method for a receiver. The method comprises receiving a receive symbol. The receive symbol is based on a transmit symbol transmitted by transmitter. The transmit symbol is based on two or more payload data symbols comprising information on payload data. The method further comprises estimating a radio channel between the transmitter and the receiver based on the receive symbol. Moreover, the method comprises estimating the payload data comprised in the transmit symbol based on the received symbol. The method further comprises detecting the payload data based on the estimated payload data.

Embodiments further provide a method for a transmitter comprising transmitting a plurality of transmit symbols.

A transmit symbol is based on two or more payload data symbols comprising information on payload data. The plurality of transmit symbols is transmitted on a plurality of transmit antennas based on a space-time precoding scheme. The space-time precoding scheme applies a phase shift to at least one of simultaneously transmitted transmit symbols. The phase shift is applied to different transmit symbols in different time instances of the space time precoding scheme.

Moreover, embodiments provide a computer program having a program code for performing one of the above-described methods, when the computer program is executed on a computer or a processor.

Embodiments may provide the advantage that a joint channel and data estimation is provided for advance processing concepts, such as pilot-free MIMO systems. Embodiments may provide a very robust and near capacity concept, i.e. embodiments may provide a capacity of a wireless system which is improved or near optimum. As compared to conventional concepts, the capacity may be improved. Embodiments further provide the advantage that no or reduced dedicated time and frequency resources may be required, as no or at least less discrete pilot symbols can be utilized. Embodiments may even outperform conventional joint channel and data estimation solutions. Embodiments may be very attractive for future 4G/5G wireless communication systems due their zero or low pilot-related physical overheads, and their robustness, which can be introduced by, for example, trellis detection. Moreover, embodiments may provide the advantage that space time coding and spatial multiplexing transmission modes and their variants or extensions can be used including WIreless FIdelity (WIFI) 802.11n and LTE, as well as with 5G systems.

Brief Description of the Figures

Some other features or aspects will be described using the following non-limiting embodiments of apparatuses and/or methods and/or computer programs by way of example only, and with reference to the accompanying Figures, in which

Fig. 1     illustrates an embodiment of a receiver apparatus;

Fig. 2     illustrates a block diagram of a MIMO transmitter structure in an embodiment;

Fig. 3     shows a state diagram of a DPSK modulation in an embodiment;

Fig. 4     shows a trellis structure for a $M_T \times M_R$ MIMO scheme in an embodiment;

Fig. 5     shows details of a trellis structure for a $M_T \times M_R$ MIMO spatial multiplexing system;

Fig. 6     shows simulation results of achievable rates versus SNR in an embodiment using 2x2 MIMO;

Fig. 7     illustrates an EXIT-chart comparing BPSK with superimposed pilot symbols with an embodiment using MIMO-SMX- 2-DPSK;

Fig. 8     illustrates simulation results of achievable rates versus fading rate of the wireless channel comparing BPSK with superimposed pilot symbols with an embodiment using MIMO-SMX- 2-DPSK for an average SNR of 3dB;

Fig. 9     illustrates simulation results of achievable rates versus fading rate of the wireless channel comparing BPSK with superimposed pilot symbols with an embodiment using MIMO-SMX- 2-DPSK for an average SNR of 10dB; and

Fig. 10    shows a block diagram of an embodiment of a method for a wireless receiver.

Description of Some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

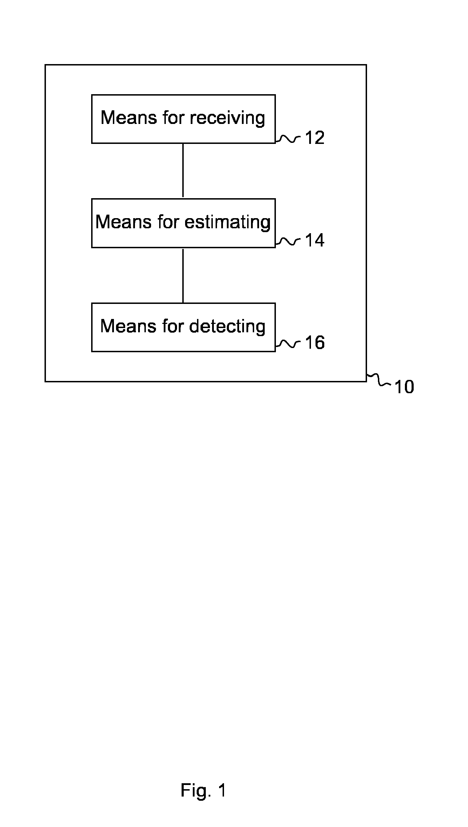

Fig. 1 shows an embodiment of the receiver apparatus 10. The apparatus 10 comprises means for receiving 12 a receive symbol. The receive symbol is based on a transmit symbol transmitted by a transmitter. The transmit symbol is based on two or more payload data symbols comprising information on payload data. The apparatus further comprises means for estimating 14 a radio channel between the transmitter and the receiver based on the receive symbol. The means for receiving is further operable to estimate the payload data comprised in the transmit symbol based on the receive symbol. The means for receiving and the means for estimating are coupled to each other. The apparatus 10 further comprises means for detecting 16 the payload data based on the estimated payload data. The means for detecting 16 is coupled with the means for estimating 14.

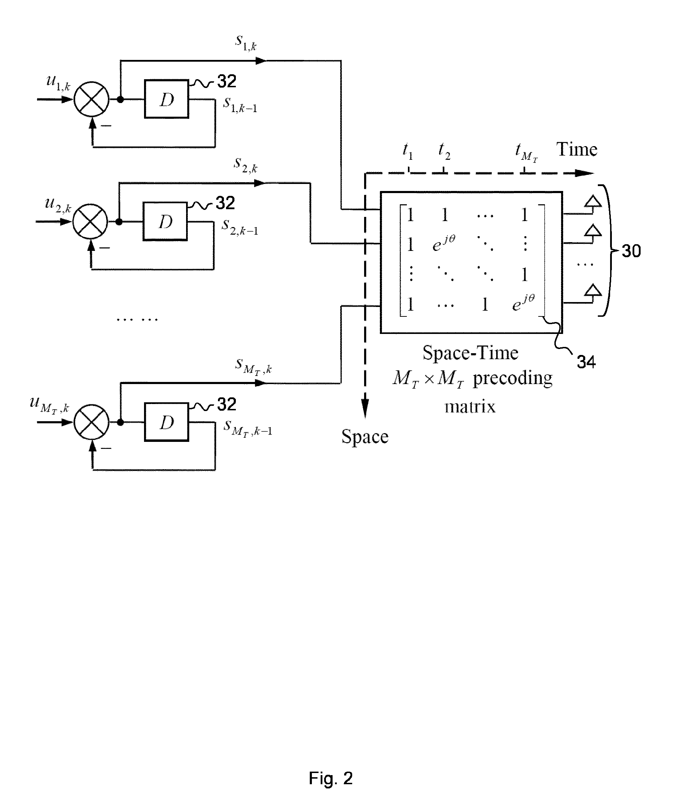

In the following embodiment the transmit symbol corresponds to a differentially encoded payload data symbol, i.e. the transmit symbol is DPSK encoded. Moreover, an $M_T \times M_R$ MIMO Spatial Multiplexing (SMX) system with $M_T=M_R$ is considered. Fig. 2 illustrates a block diagram of the MIMO transmitter structure in the embodiment, which is using a plurality of $M_T$ transmit antennas 30. The embodiment of the MIMO transmitter apparatus is operable to transmit a plurality of transmit symbols. In line with the above description a transmit symbol is based on two or more payload data symbols comprising information on payload data, in the present embodiment the transmit symbols are DPSK modulated. The transmitter apparatus is operable to transmit the plurality of transmit symbols on $M_T=M_R$ transmit antennas based on the space-time precoding scheme 34 as shown in Fig. 2. The space time precoding scheme applies a phase shift $\theta=]0...2\pi[$ to at least one of simultaneously transmitted transmit symbols. The phase shift $\theta=]0...2\pi[$ is applied to different transmit symbols in different time instances of the space time precoding scheme.

2-DPSK at time instant $k$ is assumed, regarding information or payload symbols $u_{m,k}=\pm1$ with $m=1,2,\cdots,M_T$. Fig. 2 shows the $m=1,2,\cdots,M_T$ payload symbols $u_{1,k}, u_{2,k},...,$ $u_{M_T,k}$ being multiplied with delayed version of the transmit symbols $s_{1,k-1}, s_{2,k-1},...,s_{M_T,k-1}$ of the prior time instance $k$-1 using the delay blocks 32. The 2-DPSK encoding can be presented as

$$s_{m,k} = -u_{m,k} \cdot s_{m,k-1}, \qquad\qquad (1)$$

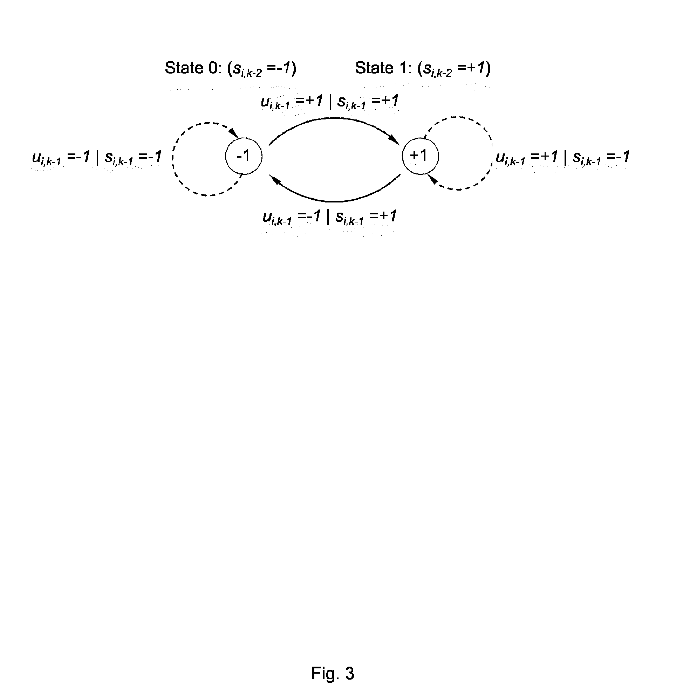

e.g. with initialization $S_{1,-1} = S_{2,-1} = \cdots = S_{M_T,k-1}$ Note that $s_{1,-1}, s_{2,-1},..., s_{M_T,k-1}$ are virtual symbols and do not occupy the time resource. Fig. 3 shows a state diagram for the 2-DPSK in the embodiment. Fig. 3 shows a "-1"-state on the left hand side and a "+1"-state on the right hand side, which represent transmit symbols $s_{i,k-2}$ in the sequence at an arbitrary transmit antenna $i$ (positive integer) at an arbitrary time instance $k$-2. Depending on the next payload symbol $u_{i,k-1}$ the next transmit symbol $s_{i,k-1}$ depends on the state of $s_{i,k-2}$. Fig. 3 shows all combinations for the transitions. For example, if $s_{i,k-2}$=-1 and the next payload symbol $u_{i,k-1}$=-1 then $s_{i,k-1}$=-1, i.e. if the state is not changed $s_{i,k-1}$=-1, cf. also $s_{i,k-2}$=+1 for $u_{i,k-1}$=+1. If $s_{i,k-2}$=-1 and the next payload symbol $u_{i,k-1}$=+1 then $s_{i,k-1}$=+1, i.e. if the state is changed $s_{i,k-1}$=+1, cf. also $s_{i,k-2}$=+1 for $u_{i,k-1}$=-1.

In the following, spatial multiplexing will be considered. In other embodiments Space-Time Coding (STC) may be utilized. The following precoding to assure matrix invertibility may not be carried out when using STC. Then space-time precoding is taken into account by the $M_T \times M_T$ precoding matrix 34. It yields the MIMO system equation

$$\mathbf{Y}_k = \mathbf{H}_k \left( \begin{bmatrix} 1 & 1 & \cdots & 1 \\ 1 & e^{j\theta} & \ddots & \vdots \\ \vdots & \ddots & \ddots & 1 \\ 1 & \cdots & 1 & e^{j\theta} \end{bmatrix} \circ \underbrace{\begin{bmatrix} s_{1,k} & s_{1,k+1} & \cdots & s_{1,k+M_T-1} \\ s_{2,k} & s_{2,k+1} & \cdots & s_{2,k+M_T-1} \\ \vdots & \vdots & \vdots & \vdots \\ s_{M_T,k} & s_{M_T,k+1} & \cdots & s_{M_T,k+M_T-1} \end{bmatrix}}_{\mathbf{S}_k} \right) + \mathbf{N}_k , \quad (2)$$

where operation ∘ denotes Hadamard product, namely element-wise matrix multiplication. $\mathbf{Y}_k$ denotes the vector of $M_T=M_R$ receive symbols and $\mathbf{N}_k$ denotes a vector of Additive White Gaussian Noise (AWGN) components. Notice that matrix $\mathbf{S}_k$ in (2) is invertible, due to $\theta=]0...2\pi[$, so that the channel matrix can be simply reconstructed at the receiver apparatus 10 by

$$\mathbf{H}_k \approx \mathbf{Y}_k \mathbf{S}_k^{-1} \qquad\qquad (3)$$

by assuming that the MIMO channel matrix $\mathbf{H}_k$ is time-invariant, during the time instant $[gM_T,(g+1)M_T-1]$ with a non-negative integer $g$. In line with the above, the means for receiving 12 comprises a plurality of receive antennas $M_R$ for receiving a plurality of receive symbols $\mathbf{Y}_k$.

In other words, in line with Fig. 2 a method for a transmitter is provided by the embodiment. The method comprises transmitting a plurality of transmit symbols and a transmit symbol is based on two or more payload data symbols comprising information on payload data. The plurality of transmit symbols is transmitted on a plurality of transmit antennas based on the space-time precoding scheme 34, cf. (2). The space-time precoding scheme applies a phase shift $\theta$ to at least one of simultaneously transmitted transmit symbols. The phase shift $\theta$ is applied to different transmit symbols in different time instances of the space time precoding scheme.

The means for estimating 14 is operable to estimate the radio channel $\mathbf{H}_k$ between the transmitter as shown in Fig. 2 and the plurality of receive antennas $M_R$ based on the plurality of receive symbols. The means for estimating 14 is operable to estimate the payload data $u_{1,k}, u_{2,k}, ..., u_{\mathrm{MT},k}$ comprised in one or more transmit symbols $s_{1,k-1}, s_{2,k-1}, ..., s_{\mathrm{MT},k-1}$ based on the plurality of receive symbols $\mathbf{Y}_k$. Furthermore, the plurality of receive symbols $\mathbf{Y}_k$ comprises a plurality of spatially multiplexed or space time coded transmit symbols $s_{1,k-1}, s_{2,k-1}, ..., s_{\mathrm{MT},k-1}$, each comprising information on payload data $u_{1,k}, u_{2,k}, ..., u_{\mathrm{Mt},k}$. The means for estimating 14 is operable to group a number of subsequent receive symbols to a block of receive symbols and to perform the iteration within the block of receive symbols. The means for estimating 14 is operable to receive a plurality of receive symbols $\mathbf{Y}_k$ using the plurality of $M_R$ receive antennas during each of a number of subsequent time intervals $[gM_T,(g+1)M_T-1]$. Each of the receive symbols $\mathbf{Y}_k$ is based on a plurality of transmit symbols $\mathbf{S}_k$ being transmitted during each of the number of subsequent time intervals $[gM_T,(g+1)M_T-1]$.

One can notice that the matrix $\mathbf{S}_k$ in (2) and (3) is an undetermined term. Hence, a trellis structure is established. That is to say the means for estimating 14 is operable to jointly estimate the payload data $u_{1,k}, u_{2,k}, ..., u_{\mathrm{MT},k}$ and the radio channel between $\mathbf{H}_k$ the receiver apparatus 10 and the transmitter based on the received symbols $\mathbf{Y}_k$. Each node in the trellis is connected with $2^{MM_t}$ incoming and outgoing transitions, where M denotes the number of bits per modulated symbol $u_{1,k}, u_{2,k}, ..., u_{\mathrm{MT},k}$. By defining a memory $v \geq M_T$, the number of the states within a certain time instant can be determined as $2^{v(MM_T)}$. The state index of a certain node in the trellis, can indicate the transmitted bit pair during the defined memory $v$, called hypothesize bit pairs or hypotheses. In other words the means for estimating 14 is operable to determine a hypothesis on the transmit symbols $s_{1,k-1}, s_{2,k-1}, ..., s_{\mathrm{MT},k-1}$ and the means for estimating 14 is operable to determine the channel estimate on $\mathbf{H}_k$ based on the hypothesis.

Namely, the state index of an arbitrary node in the trellis corresponds to a hypothesis of the matrix $S_{k-i-(M_T-1)}$ with $1 \leq i \leq v$ as

$$\mathbf{S}_{k-i-(M_T-1)} = \mathbf{P}_{k-i-(M_T-1)} \circ \begin{bmatrix} S_{1,k-i-(M_T-1)} & S_{1,k-i-(M_T-2)} & \cdots & S_{1,k-i} \\ S_{2,k-i-(M_T-1)} & S_{2,k-i-(M_T-2)} & \cdots & S_{2,k-i} \\ \vdots & \vdots & \vdots & \vdots \\ S_{M_T,k-i-(M_T-1)} & S_{M_T,k-i-(M_T-2)} & \cdots & S_{M_T,k-i} \end{bmatrix} \qquad (4)$$

where $P_{k-i-(M_T,k-1)}$ denotes the space-time precoding matrix, deployed for time instant $k-i-(M_T-1)$ to time instant $k-i$. The channel matrix $\mathbf{H}_k^p$, i.e. the predicted or estimated radio channel, of the current time instant $k$ can be predicted by

$$\mathbf{H}_k^p = \frac{1}{v} \sum_{i=1}^{v} \mathbf{Y}_{k-M_T-i} \mathbf{S}_{k-M_T-i}^{-1} \, . \qquad (5)$$

That is to say the means for estimating 14 is operable to group the receive symbols $\mathbf{Y}_k$ received during the number of subsequent time intervals and to determine a group of states for each of the time intervals. The group of states comprises at least one state for each combination of a transmit symbol from a transmit symbol alphabet and a transmit antenna of the transmitter. The means for estimating 14 is operable to perform an iteration among the states of the group of states.

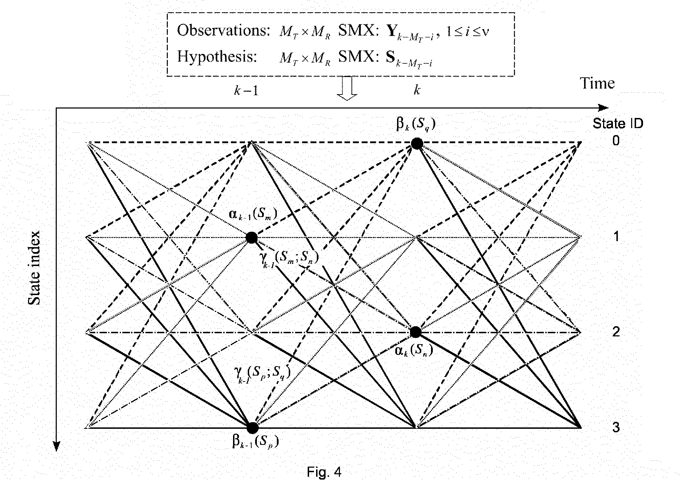

Fig. 4 shows a trellis structure for a $M_T \times M_R$ MIMO scheme in an embodiment. In Fig. 4 a trellis structure is shown according to the Maximum *A Posteriori* (MAP) algorithm, the forward and backward recursions or iterations are carried out by means of the coefficients $\alpha$ and $\beta$, respectively. That is to say the means for estimating 14 is operable in an iteration to determine a sequence of hypothesis and channel estimates based on the sequence or vector of receive symbols.

The trellis structure shown in Fig. 4 is a two-dimensional graph, which shows the time indices $k$ towards the right and state indices towards the bottom of the figure. In each state multiple observations $Y_{k-M_T-1}$ are made, i.e. the receive symbols are considered, at the receiver 10 and stored in a memory for $1 \leq i \leq v$. Moreover, hypotheses $S_{k-M_T-i}$ are generated.

The different line types in Fig. 4 indicate different paths or transitions in the trellis diagram. The broken line paths all end in states at the top (first state), the dotted line paths all end in the second state, the dashed-dotted line paths all end in the third state, and the solid line paths all end in the fourth state. During the transition $k-1$ (between time instant $k-1$ and $k$), there are the available metric increments $\gamma_{k-1}$ for any connections between the nodes in the trellis. In the forward recursion, as shown in the embodiment in Fig. 4, the target node $S_n$ is forwardly connected with four dashed dotted branches. The corresponding originating nodes are denoted as $S_m$, establishing a set $M$ of indices.

In forward recursion, it holds

$$\alpha_k(S_n) = \log\left\{ \sum_{m \in \mathcal{M}} \exp\left[\alpha_{k-1}(S_m) + \gamma_{k-1}(S_m; S_n)\right] \right\}, \qquad (6)$$

where set $M$ denotes the transitions forwardly connected with state $S_n$ at time instant $k$. In the embodiment shown in Fig. 4 $M=\{0,1,2,3\}$. Similarly, in the backward recursion, the target node $S_p$ is backwardly connected with four branches identified by different line styles. The corresponding nodes are denoted as $S_q$, establishing a indices set $Q$. And in backward recursion, it holds

$$\beta_{k-1}(S_p) = \log\left\{\sum_{q\in Q}\exp\left[\beta_k(S_q)+\gamma_{k-1}(S_p;S_q)\right]\right\}, \qquad (7)$$

where set $Q$ denotes the transitions backwardly connected with state Sp at time instant $k$-1, $Q=\{0,1,2,3\}$.

At the current time instant $k$, the metric increment $\gamma_{k-1}$ is,

$$\gamma_{k-1} = -\frac{1}{2\sigma_{\mathrm{Pre}}^2}\left\|\mathbf{y}_{k-1} - \mathbf{H}_k^p\left(\mathbf{p}_{k-1}\circ\mathbf{s}_{k-1}\right)\right\|^2 + \frac{1}{2}\sum_{m=1}^{M_T}\mathcal{L}_{a,m,k-1}u_{m,k-1}$$

$$\qquad (8)$$

$$= -\frac{1}{2\sigma_{\mathrm{Pre}}^2}\left\|\mathbf{y}_{k-1} - \mathbf{H}_k^p\left(\mathbf{p}_{k-1}\circ\mathbf{s}_{k-1}\right)\right\|^2 - \frac{1}{2}\sum_{m=1}^{M_T}\mathcal{L}_{a,m,k-1}s_{m,k-2}s_{m,k-1}$$

where $\mathbf{p}_{k-1}$ denotes the spatial multiplexing precoding vector, corresponding to transition $k$-1, and $L_{a,m,k-1}$ stands for *a priori* knowledge available for information symbol $u_{m,k-1}$ of m -th stream. $\sigma_{\mathrm{Pre}}^2$ represents the noise power. It is to be noted that embodiments using MIMO-STC with DPSK modulation may not use the above precoding as the STC code matrix in case of STC is invertible, due to the its orthogonality.

Finally, the Log-Likelihood-Ratio (LLR) of $j$-th bit in $i$-th stream can be obtained by

$$\mathcal{L}\left[u_{i,k-1}^{(j)}\right] = \frac{\log\left\{\displaystyle\sum_{m,n\in\mathcal{A}_{i,j}^{(1)}}\exp\left[\alpha_{k-1}(S_m)+\gamma_{k-1}(S_m;S_n)+\beta_k(S_n)\right]\right\}}{\log\left\{\displaystyle\sum_{m,n\in\mathcal{A}_{i,j}^{(0)}}\exp\left[\alpha_{k-1}(S_m)+\gamma_{k-1}(S_m;S_n)+\beta_k(S_n)\right]\right\}} \qquad (9)$$

where sets $\mathcal{A}_{i,j}^{(1)}$ and $\mathcal{A}_{i,j}^{(0)}$ denote j -th bit $u_{i,k-1}^{(j)}$ of symbol $u_{i,k-1}$ is 1 and 0 during transition $k$-1, respectively, with stream index $i=1,2,\cdots,M_T$.

Notice that equation (9) is deployed to compute the Log-Likelihood-Ratio (LLR) of the bits of information symbol $u_{i,k-1}$ instead of the DPSK encoded symbol $s_{i,k-1}$, illustrated in the trellis diagram above. The performance can be enhanced by taking into account the memory-1 2-DPSK demodulation $u_{i,k-1}=-s_{i,k-1}s_{i,k-2}$, as shown in Fig. 3.

In other words, the means for estimating 14 is operable to determine a reliability measure, i.e. the LLR, for one or more payload symbols $u_{i,k-1}$ based on one or more receive symbols. The means for estimating 14 is operable to estimate the payload data $u_{i,k-1}$ based on the maximum likelihood of the one or more transmit symbols in consequence of the one or more receive symbols.

Moreover, the means for estimating 14 is operable to perform an iteration through the different states. A state is based on a hypothesis $S_{k-Mt-i}$ on one or more transmit symbols. The means for estimating 14 is operable to estimate

the radio channel $\mathbf{H}_k^p$ between the transmitter and the receiver 10 based on the hypothesis $\mathbf{S_{k-M_T-i}}$. The means for estimating 14 is operable to determine the reliability measure on the transmit symbol or on the payload data symbol based on the hypothesis. The means for estimating 14 is operable to perform the iteration in the group of states. The iteration is performed in forward direction from a state corresponding to an earlier time interval $k$-1 towards a state of a later time interval $k$. The iteration is also performed in backward direction from the later time interval $k$ to the earlier time interval $k$-1. The means for estimating 14 is operable to update the reliability measures

$$\mathcal{L}\left[u_{i,k-1}^{(j)}\right]$$

for each state based on the iteration.

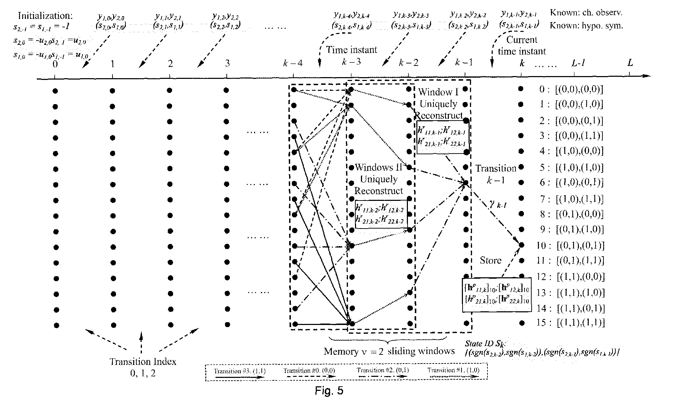

Fig. 5 shows details of a trellis structure for a 2×2 MIMO SMX system. Fig. 5 depicts a scenario for computing the branch metric $\gamma_{k-1}$ between From-state and Current-state. Fig. 5 demonstrates the one-to-one correspondence of state identification $S_k$ with state identification $[(\text{sgn}(s_{2,k-2}), \text{sgn}(s_{1,k-2})), (\text{sgn}(s_{2,k-1}), \text{sgn}(s_{1,k-1}))]$ the different combinations of two subsequent pairs $[(s_{2,k-2}, s_{1,k-2}), (s_{2,k-1}, s_{1,k-1})]$ determine the different hypothesized bit pairs shown on the right of Fig. 5. The channel reconstruction is carried out within the memory $v$=2. Fig. 5 illustrates a block of $k$=0...$L$ subsequent transmission slots, with the corresponding receive symbols or observations $y_{1,0}$, $y_{2,0}$ to $y_{1,k-1}$, $y_{2,k-1}$ until slot k. Fig. 5 further shows the transmit data symbols at the corresponding transmission slots, namely $(s_{2,0}, s_{1,0})$ to $(s_{2,k-1}, s_{1,k-1})$. As indicated in Fig. 5 on the left hand side initialization can be done by $s_{2,-1}=s_{1,-1}=-1$, $s_{2,0}=-u_{2,0}s_{2,-1}=u_{2,0}$, and $s_{1,0}=-u_{1,0}s_{1,-1}=u_{1,0}$. In line with what was described above the radio channels can be predicted or estimated based on the hypothesis, cf. (5).

Fig. 5 demonstrates the one-to-one correspondence of the state identification $S_k$ and the hypothesis and the channel reconstruction within the memory $v$=2, with respect to two sliding windows I and II, which are shown in Fig. 5 for a memory depth of $v$=2, wherein window I extends from time instant $k$-3 to $k$-1, window II extends from time instant $k$-4 to $k$-2. Fig. 5 illustrates different transitions in states $k$-4 to $k$-1. For overview purposes, not all of the possible transitions are shown. As it was explained for Fig. 4 in each node 4 transitions originate.

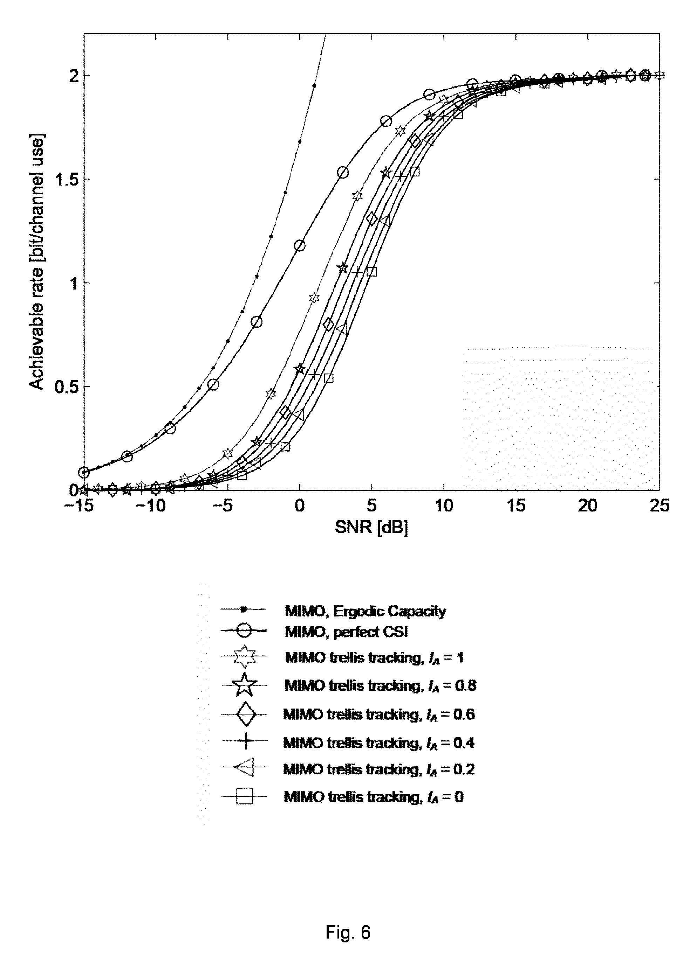

Fig. 6 shows simulation results of achievable rates versus Signal-to-Noise-Ratio (SNR) in an embodiment using 2×2 MIMO. In Fig. 6, the achievable rates versus the SNR curves are presented for 2×2 MIMO-SMX with 2-DPSK, with different additional *a priori* information of the data symbol, quantified by $I_A$={0,0.2,0.4,0.6,0.8,1}. The memory depth $v$ was set to 2, $T_sf_D$ was set to 0.01 (symbol duration $T_s$ time Doppler shift $f_D$). The factor $T_sf_D$ represents the fading rate of the wireless channel, i.e. the symbol duration $T_s$ times the Doppler shift $f_D$. Firstly, the peak achievable rate can be approached, namely a loss of rate cannot be observed. Secondly, it can be noticed that the MIMO-SMX performance with perfect CSI can be approached, with increase $I_A$. This indicates that the algorithm can be integrated into an iterative receiver and can possibly yield the corresponding performance.

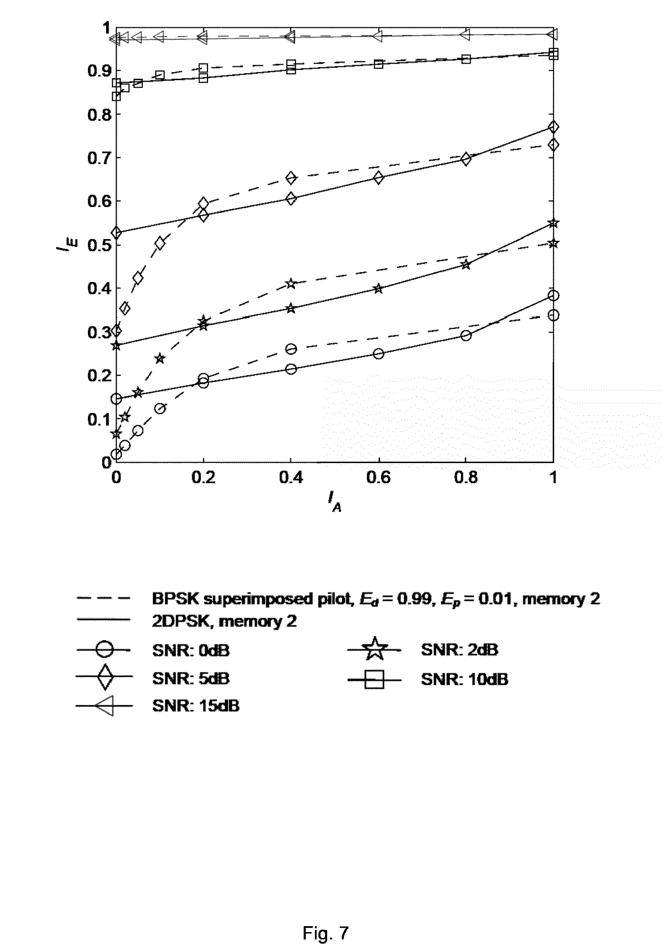

Fig. 7 illustrates an EXIT-chart comparing BPSK with superimposed pilot symbols with an embodiment using MIMO-SMX- 2-DPSK. In Fig. 7, the EXtrinsic Information Transfer (EXIT) chart is presented to compare a Binary Phase Shift Keying (BPSK) system with superimposed pilot symbols to the embodiment with the pilot-free scheme for MIMO-SMX 2-DPSK considered in Fig. 6. Fig. 7 illustrates the extrinsic information $I_E$ versus the a posteriori information $I_A$ for both concepts. The BPSK system uses superimposed pilot symbols, where 99% of the energy is dedicated to data symbols ($E_d$=0.99) and 1% of the energy is used for the pilot symbols ($E_p$=0.01). Fig. 7 shows the comparison at different SNR-levels, i.e. 0dB, 2dB, 5dB, 10dB, and 15dB.

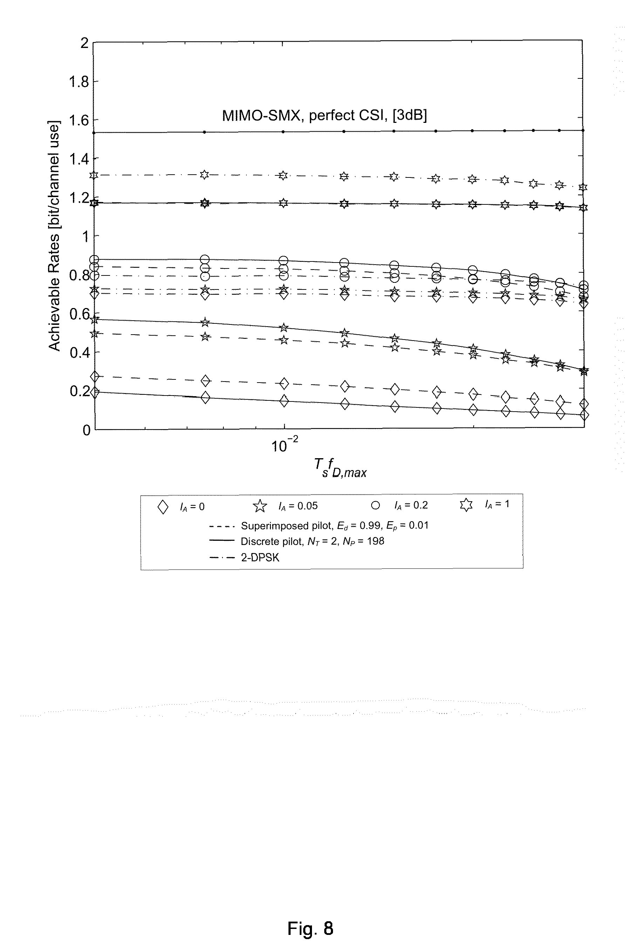

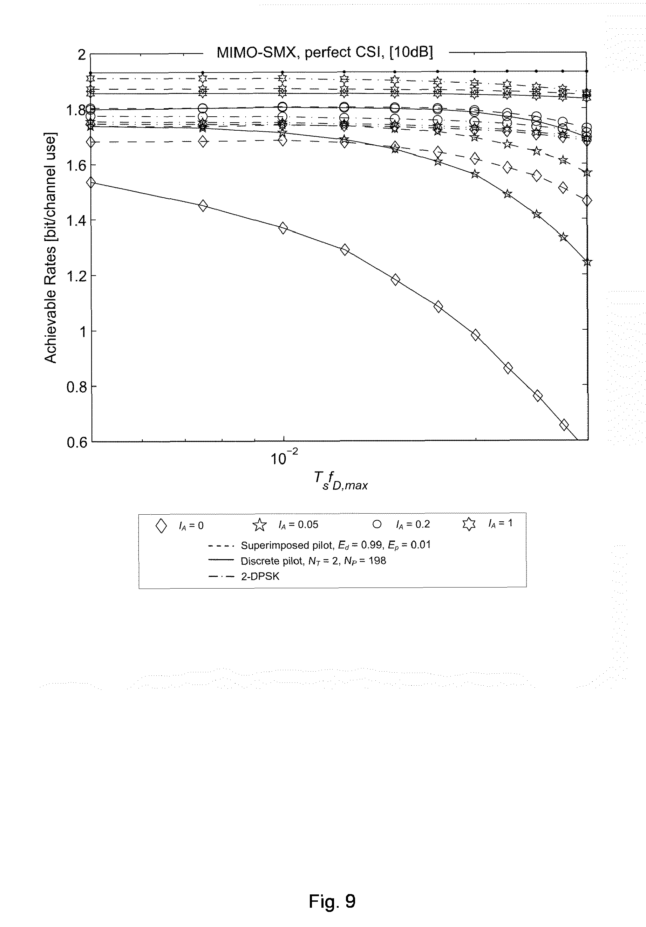

Generally, it can be noticed that the proposed scheme outperforms especially at $I_A$=0 and $I_A$=1. The better initial $I_E$ value at $I_A$=0 corresponds to small number of iterative detections, and a better $I_E$ value at $I_A$=1 corresponds to better absolute performance. Fig. 8 illustrates simulation results of achievable rates versus fading rate of the wireless channel comparing BPSK with superimposed pilot symbols with an embodiment using MIMO-SMX- 2-DPSK for an average SNR of 3dB. In Fig. 8, the comparison between MIMO-SMX BPSK discrete, superimposed pilot, and 2-DPSK is illustrated with respect to the achievable rate versus the fading rate of the channel. The factor $T_sf_D$ represents the fading rate of wireless channel. Generally, Fig. 8 corresponds to what could be expected at the very beginning, namely the proposed MIMO-SMX 2-DPSK is even less sensitive than BPSK with superimposed pilot rates, when the fading rate $T_sf_D$ increases. Additionally, for an iterative receiver, the proposed MIMO-SMX 2-DPSK scheme will consequently converge to its optimum more quickly. Fig. 9 illustrates simulation results of achievable rates versus fading rate of the wireless channel comparing BPSK with superimposed pilot symbols with an embodiment using MIMO-SMX- 2-DPSK for an average SNR of 10dB. The same observations as for Fig. 8 can be made.

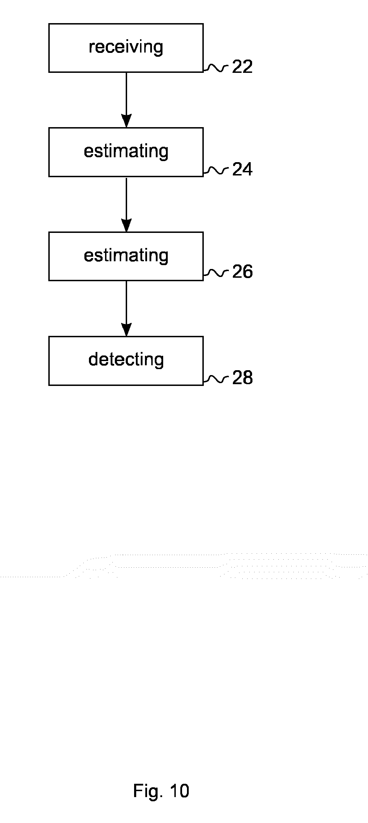

Fig. 10 shows a block diagram of an embodiment of a method for a wireless receiver. The method comprises a step of receiving 22 a receive symbol. The receive symbol is based on a transmit symbol transmitted by a transmitter. The transmit symbol is based on two or more payload data symbols comprising information on payload data. The method comprises a further step of estimating 24 a radio channel between the transmitter and the receiver based on the receive symbol. The method comprises a further step of estimating 26 the payload data comprised in the transmit symbol based on the receive symbol, and a step of detecting 28 the payload data based on the estimated payload data.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for receiving", "means for estimating", "means for detecting" etc., may be provided through the use of dedicated hardware, such as "a receiver", "an estimator", "a detector", etc. as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1.    An apparatus (10) for a receiver, comprising
    means for receiving (12) a receive symbol, the receive symbol being based on a transmit symbol transmitted by a transmitter, the transmit symbol being based on two or more payload data symbols comprising information on payload data;
    means for estimating (14) a radio channel between the transmitter and the receiver based on the receive symbol and for estimating the payload data comprised in the transmit symbol based on the receive symbol; and
    means for detecting (16) the payload data based on the estimated payload data.

2. The apparatus (10) of claim 1, wherein the transmit symbol corresponds to a differentially encoded payload data symbol.

3. The apparatus (10) of claim 1, wherein the means for receiving (12) comprises a plurality of receive antennas for receiving a plurality of receive symbols, wherein the means for estimating (14) is operable to estimate the radio channel between the transmitter and the plurality of receive antennas based on the plurality of receive symbols, and wherein the means for estimating (14) is operable to estimate the payload data comprised in one or more transmit symbols based on the plurality of receive symbols.

4. The apparatus (10) of claim 3, wherein the plurality of receive symbols comprises a plurality of spatially multiplexed or space time coded transmit symbols, each comprising information on payload data.

5. The apparatus (10) of claim 1, wherein the means for estimating (14) is operable to jointly estimate the payload data and a radio channel between the receiver and the transmitter based on the received symbol, and/or wherein the means for estimating (14) is operable to determine a hypothesis on the transmit symbol and wherein the means for estimating (14) is operable to determine a channel estimate based on the hypothesis.

6. The apparatus (10) of claim 5, wherein the means for estimating (14) is operable in an iteration to determine a sequence of hypothesis and channel estimates based on a sequence of receive symbols.

7. The apparatus (10) of claim 1, wherein the means for estimating (14) is operable to determine a reliability measure for one or more transmit symbols or payload data symbols based on one or more receive symbols and to estimate the payload data based on a maximum likelihood of the one or more transmit symbols in consequence of the one or more receive symbols, and/or wherein the means for estimating (14) is operable to perform an iteration through different states, wherein a state is based on a hypothesis on one or more transmit symbols, wherein the means for estimating (14) is operable to estimate the radio channel between the transmitter and the receiver based on the hypothesis, and wherein the means for estimating (14) is operable to determine a reliability measure on the transmit symbol or on the payload data symbol based on the hypothesis.

8. The apparatus (10) of claim 9, wherein the means for estimating (14) is operable to group a number of subsequent receive symbols to a block of receive symbols and to perform the iteration within the block of receive symbols.

9. The apparatus (10) of claim 9, wherein the means for estimating (14) is operable to receive a plurality of receive symbols using a plurality of receive antennas during each of a number of subsequent time intervals, wherein each of the receive symbols is based on a plurality of transmit symbols being transmitted during each of the number of subsequent time intervals.

10. The apparatus (10) of claim 11, wherein the means for estimating (14) is operable to group the receive symbols received during the number of subsequent time intervals and to determine a group of states for each of the time intervals, the group of states comprising at least one state for each combination of a transmit symbol from a transmit symbol alphabet and a transmit antenna of the transmitter, and wherein the means for estimating (14) is operable to perform the iteration among the states of the group of states.

11. The apparatus (10) of claim 11, wherein the means for estimating (14) is operable to perform the iteration in the group of states, wherein the iteration is performed in forward direction from a state corresponding to an earlier time interval towards a state of a later time interval, and wherein the iteration is performed in backward direction from the later time interval to the earlier time interval, and wherein the means for estimating (14) is operable to update the reliability measure for each state based on the iteration.

12. A transmitter apparatus being operable to transmit a plurality of transmit symbols, a transmit symbol being based on two or more payload data symbols comprising information on payload data, the transmitter apparatus being operable to transmit the plurality of transmit symbols on a plurality of transmit antennas based on a space-time precoding scheme, wherein the space time precoding scheme applies a phase shift to at least one of simultaneously transmitted transmit symbols, and wherein the phase shift is applied to different transmit symbols in different time instances of the space time precoding scheme.

13. A method for a transmitter comprising transmitting a plurality of transmit symbols, a transmit symbol being based on two or more payload data symbols comprising information on payload data, wherein the plurality of transmit symbols is transmitted on a plurality of transmit antennas based on a space-time precoding scheme, wherein the space-time precoding scheme applies a phase shift to at least one of simultaneously transmitted transmit symbols, and wherein the phase shift is applied to different transmit symbols in different time instances of the space time precoding scheme.

14. A method for a receiver, comprising
receiving (22) a receive symbol, the receive symbol being based on a transmit symbol transmitted by a transmitter, the transmit symbol being based on two or more payload data symbols comprising information on payload data; estimating (24) a radio channel between the transmitter and the receiver based on the receive symbol; estimating (26) the payload data comprised in the transmit symbol based on the receive symbol; and detecting (28) the payload data based on the estimated payload data.

15. A computer program having a program code for performing the method of claim 14, when the computer program is executed on a computer or processor.

Fig. 1

Fig. 2

State 0: $(s_{i,k-2} = -1)$      State 1: $(s_{i,k-2} = +1)$

$u_{i,k-1} = +1 \mid s_{i,k-1} = +1$

$u_{i,k-1} = -1 \mid s_{i,k-1} = -1$

$u_{i,k-1} = +1 \mid s_{i,k-1} = -1$

$u_{i,k-1} = -1 \mid s_{i,k-1} = +1$

Fig. 3

Fig. 4

Fig. 5

Fig. 6

Fig. 7

Fig. 8

Fig. 9

```
┌─────────────────────┐
│     receiving       │
│                     │╮ 22
└─────────────────────┘
           │
           ▼
┌─────────────────────┐
│     estimating      │
│                     │╮ 24
└─────────────────────┘
           │
           ▼
┌─────────────────────┐
│     estimating      │
│                     │╮ 26
└─────────────────────┘
           │
           ▼
┌─────────────────────┐
│     detecting       │
│                     │╮ 28
└─────────────────────┘
```

Fig. 10

EP 2 709 323 A1

Europäisches
Patentamt
European
Patent Office
Office européen
des brevets

**EUROPEAN SEARCH REPORT**

Application Number

EP 12 30 6111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHENG CHEN ET AL: "Blind joint maximum likelihood channel estimation and data detection for SIMO systems", INTERNATIONAL JOURNAL OF AUTOMATION AND COMPUTING, vol. 4, no. 1, 1 January 2007 (2007-01-01), pages 47-51, XP055051407, ISSN: 1476-8186, DOI: 10.1007/s11633-007-0047-y | 1-11,14,15 | INV. H04L25/02 |
| A | * the whole document * | 12,13 | |
| X | HANBING ZHOU ET AL: "A Novel Adaptive Maximum Likelihood Sequence Detection Receiver for MIMO-OFDM System", 2006 INTERNATIONAL CONFERENCE ON COMMUNICATIONS, CIRCUITS AND SYSTEMS : GUILIN, GUANGXI, CHINA, 25 - 28 JUNE 2006, IEEE SERVICE CENTER, PISCATAWAY, NJ, 1 June 2006 (2006-06-01), pages 1045-1048, XP031010604, ISBN: 978-0-7803-9584-8 | 1-11,14,15 | |
| A | * the whole document * | 12,13 | TECHNICAL FIELDS SEARCHED (IPC) H04L |
| A | SAYAK BOSE ET AL: "Multiuser MIMO capacity with limited feedback trellis exploration based precoder", COMPUTING, NETWORKING AND COMMUNICATIONS (ICNC), 2012 INTERNATIONAL CONFERENCE ON, IEEE, 30 January 2012 (2012-01-30), pages 1087-1091, XP032130629, DOI: 10.1109/ICCNC.2012.6167375 ISBN: 978-1-4673-0008-7 * the whole document * | 12,13 | |

-/--

The present search report has been drawn up for all claims

| Place of search | Date of completion of the search | Examiner |
|---|---|---|
| Munich | 15 March 2013 | Haas, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

25

Europäisches
Patentamt

European
Patent Office

Office européen
des brevets

# EUROPEAN SEARCH REPORT

Application Number

EP 12 30 6111

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2006/176977 A1 (JAFARKHANI HAMID [US] ET AL) 10 August 2006 (2006-08-10)<br>* abstract; figures 1-8 *<br>* paragraph [0016] *<br>* paragraph [0040] - paragraph [0043] *<br>* paragraph [0063] - paragraph [0067] *<br>----- | 12,13 | |
| A | ABUTHINIEN M ET AL: "Semi-blind Joint Maximum Likelihood Channel Estimation and Data Detection for MIMO Systems", IEEE SIGNAL PROCESSING LETTERS, IEEE SERVICE CENTER, PISCATAWAY, NJ, US, vol. 15, 1 January 2008 (2008-01-01), pages 202-205, XP011224767, ISSN: 1070-9908<br>* the whole document *<br>----- | 1-15 | |
| A | ABUTHINIEN M ET AL: "Joint Maximum Likelihood Channel Estimation and Data Detection for MIMO Systems", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 5354-5358, XP031126519, ISBN: 978-1-4244-0353-0<br>* the whole document *<br>----- | 1-15 | TECHNICAL FIELDS SEARCHED (IPC) |
| A | WO 2007/101338 A2 (UNIV ALBERTA [CA]; BEAULIEU NORMAN C [CA]; CHEN YUNFEL [CN] UNIV ALBER) 13 September 2007 (2007-09-13)<br>* abstract; figures 5-7 *<br>* page 3, line 21 - page 4, line 8 *<br>* page 24, line 13 - page 27, line 24 *<br>* page 28, line 22 - page 30, line 5 *<br>----- | 1-15 | |

The present search report has been drawn up for all claims

| Place of search | Date of completion of the search | Examiner |
|---|---|---|
| Munich | 15 March 2013 | Haas, Hans |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 12 30 6111

The Search Division considers that the present European patent application does not comply with the requirements of unity of invention and relates to several inventions or groups of inventions, namely:

1. claims: 1-11, 14, 15

   Jointly estimating a channel and detecting received data based on payload data symbols
   ---

2. claims: 12, 13

   Applying a phase shift to different transmit symbols in different time instances of a space time precoding scheme to enable trellis decoding
   ---

EP 2 709 323 A1

**ANNEX TO THE EUROPEAN SEARCH REPORT
ON EUROPEAN PATENT APPLICATION NO.**

EP 12 30 6111

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2013

| Patent document cited in search report | Publication date | Patent family member(s) | Publication date |
|---|---|---|---|
| US 2006176977 A1 | 10-08-2006 | EP 1846285 A2 | 24-10-2007 |
| | | KR 20070104356 A | 25-10-2007 |
| | | US 2006176977 A1 | 10-08-2006 |
| | | WO 2006076527 A2 | 20-07-2006 |
| WO 2007101338 A2 | 13-09-2007 | CA 2644797 A1 | 13-09-2007 |
| | | EP 1997247 A2 | 03-12-2008 |
| | | JP 2009529256 A | 13-08-2009 |
| | | KR 20080110790 A | 19-12-2008 |
| | | US 2009092058 A1 | 09-04-2009 |
| | | WO 2007101338 A2 | 13-09-2007 |